# EUROPÄISCHE PATENTSCHRIFT

(11) **EP 4 410 568 B1**
(45) Veröffentlichungstag und Bekanntmachung des Hinweises auf die Patenterteilung: **18.11.2026**
(21) Anmeldenummer: 24151600.4
(22) Anmeldetag: 12.01.2024
(51) Int. Cl.: B60C 11/13, B60C 11/03

(54) **LAUFSTREIFEN FÜR EINEN FAHRZEUGREIFEN**
TREAD FOR A VEHICLE TYRE
BANDE DE ROULEMENT POUR UN PNEU DE VÉHICULE

(30) Priorität: 06.02.2023 DE 102023200943
(43) Veröffentlichungstag der Anmeldung: 07.08.2024
(73) Patentinhaber: Continental Reifen Deutschland GmbH, 30175 Hannover (DE)
(72) Erfinder: Özüduru, Ahmet, 30175 Hannover (DE); Soyyuece, Atakan, 30175 Hannover (DE); Pagac, Lubomir, 020 01 Púchov (SK); Jankowski, Morten, 30175 Hannover (DE)
(74) Vertreter: Continental Corporation

(56) Entgegenhaltungen:
- EP-B1- 1 637 357
- EP-B1- 3 160 775
- DE-A1- 102018 216 403
- JP-A- 2019 073 129

## Beschreibung

Die Erfindung betrifft einen Laufstreifen für einen Fahrzeugreifen, wobei als Bestandteil eines Profils eine Umfangsrille in dem Laufstreifen ausgebildet ist. Eine von der Axialrichtung und der Umfangsrichtung aufgespannte, radial in einer ersten oberen Höhe verlaufende imaginäre Ebene schneidet einen ersten Wandabschnitt der Umfangsrille in einer ersten oberen Schnittlinie, wobei die erste obere Schnittlinie einen ersten oberen Winkel mit der Umfangsrichtung einschließt. Eine von der Axialrichtung und der Umfangsrichtung aufgespannte, radial in einer ersten unteren Höhe verlaufende imaginäre Ebene schneidet den ersten Wandabschnitt der Umfangsrille in einer ersten unteren Schnittlinie, wobei die erste untere Schnittlinie einen ersten unteren Winkel mit der Umfangsrichtung einschließt. Hierbei ist die erste obere Höhe größer als die erste untere Höhe.

Laufstreifen gemäß dem Oberbegriff sind im Stand der Technik bekannt. Im einfachsten Fall sind sowohl der erste obere Winkel als auch der erste untere Winkel gleich Null, was einem Wandabschnitt einer schlichten Umfangsrille entsprechen würde. In einer Abwandlung können der erste obere Winkel und der erste untere Winkel beide von Null verschieden, jedoch gleich groß sein. In diesem Falle kann ein entsprechender erster Wandabschnitt Teil einer zickzackförmigen Rille sein, wobei die Wände der zickzackförmigen Rille in Umfangsrichtung abwechselnd in der einen und der anderen axialen Richtung von der Umfangsrichtung abweichen, sodass über einen Reifenumfang betrachtet im Mittel eine Umfangserstreckung erhalten bleibt. Durch ein solches Zickzack-Design kann zusätzliche Traktion in Matsch und/oder Schnee erreicht werden. Jedoch ergeben sich durch die von der Umfangsrichtung abweichenden Kanten auch Nachteile, in Form einer Reduktion des Drainagevermögens und in Form einer zusätzlichen Geräuscherzeugung, insbesondere im Bereich um 1000 Hz.

DE 10 2018 216 403 A1 beschreibt einen Reifen mit einer Hauptrille, die sich auf eine zickzackförmige Weise erstreckt und die mit abgeschrägten Oberflächen versehen ist, die eine Breite eines öffnenden Endes zu einer Kontaktfläche auf beiden Seiten der Hauptrille auf eine zickzackförmige Weise in einer Breitenrichtung erweitern. EP 1 637 357 B1 beschreibt einen Reifen, wobei sich beide Öffnungsendkanten einer umlaufenden Rille längs einer Reifenumfangsrichtung erstrecken, wobei der Rillenboden als Ganzes eine Zickzackfom bildet und wobei abgeschrägte Teile an den Rillenwänden bereitgestellt werden, wobei die abgeschrägten Flächen der abgeschrägten Teile jeweils eine flache Ebene in einer Dreiecksform haben. EP 3 160 775 B1 beschreibt einen Reifen, wobei eine Umfangsrille an einer Laufstreifenoberfläche von zwei parallel zueinander und in Umfangsrichtung verlaufenden Kanten begrenzt ist und sich aus Umfangsabschnitten zusammensetzt, in welchen der Rillengrund jeweils unter einem spitzen Winkel zur Umfangsrichtung verläuft.

Der Erfindung liegt die Aufgabe zugrunde, einen Laufstreifen für einen Fahrzeugreifen zu schaffen, in dem die Vorteile einer zickzackförmigen Umfangsrille ohne die damit einhergehenden Nachteile verwirklicht werden.

JP 2019 073129 A zeigt eine zickzackförmige Umfangsrille mit trapezförmigen Fasen am Übergang zur Laufstreifenoberfläche.

Die gestellte Aufgabe wird erfindungsgemäß mit den Merkmalen des Anspruchs 1 gelöst.

Die Erfindung erkennt, dass durch eine Reduktion des lateralen Kantenanteils an und in Richtung der Oberfläche des Laufstreifens ein verbessertes Geräuschspektrum erzielt werden kann, wobei insbesondere die Abstrahlung im Bereich um 1000 Hz verringert werden kann. Durch einen im Vergleich höheren lateralen Kantenanteil in größerer radialer Tiefe können sich in einem unteren Teil der Rille Matsch und/oder Schnee besser ansammeln, wodurch zusätzlicher Griff erzielt werden kann. Darüber hinaus hat die erfindungsgemäße Lösung einen synergetischen Effekt, insofern als die in unterschiedlichen Höhen der Rillenwand verschiedenen mit der Umfangsrichtung eingeschlossenen Winkel Verwirbelungen bei der Drainage reduzieren können.

Sofern die Richtungsbezeichnungen axial, in Axialrichtung, radial, in Radialrichtung und in Umfangsrichtung verwendet werden, beziehen sich diese auf den bestimmungsgemäß an einem Fahrzeugreifen angebrachten Laufstreifen im Kontext des bestimmungsgemäß an einem Fahrzeug angebrachten Fahrzeugreifen und dessen daran vollzogener Rollbewegung. Hierin bezieht sich die Radialrichtung auf eine zur Rotationsachse des Fahrzeugreifens senkrechte und die Rotationsachse schneidende Richtung. In Radialrichtung nach innen bzw. unten bezieht sich auf die Orientierung, die in Radialrichtung der Rotationsachse zugewandt ist. In Radialrichtung nach außen bzw. oben bezieht sich auf die Orientierung, die in Radialrichtung von der Rotationsachse abgewandt ist. Die Umfangsrichtung bezeichnet die Richtung einer Rollbewegung um die Rotationsachse. Eine in Umfangsrichtung vordere Position am Fahrzeugreifen durchläuft bei Vorwärtsfahrt des Fahrzeugs während einer 360° Umdrehung des Fahrzeugreifens früher einen minimalen Abstand zum Fahrbahnuntergrund als eine in Umfangsrichtung hintere Position, wobei die in Umfangsrichtung hinteren Position weniger als 180° hinter der vorderen Position ihren minimalen Abstand zum Fahrbahnuntergrund durchläuft. Die Axialrichtung bezieht sich auf eine Richtung parallel zur Drehachse. Axial nach innen zeigend bezieht sich dabei auf eine Orientierung, die einer Reifenäquatorebene bzw. einer Reifenäquatorlinie axial zugewandt ist. Die Reifenäquatorebene ist eine zur Rotationsachse des Fahrzeugreifens senkrechte Ebene, die durch die Mitte der axialen Breite des Fahrzeugreifens verläuft, wobei die Reifenäquatorlinie in der Reifenäquatorebene und auf der Oberfläche des Fahrzeugreifens verläuft. Als Querrichtung wird eine Richtung bezeichnet, die aus Komponenten der Radialrichtung und/oder der Axialrichtung besteht.

Insbesondere können die Umfangsrichtung und die Querrichtung auf einer Basisfläche des Laufstreifens verlaufen. Die Basisfläche fällt zusammen mit jener glatten Oberfläche, welche der Laufstreifen aufweisen würde, wenn keinerlei kleinskalige Profilelemente, wie etwa Rillen oder Schneekanten vorgesehen wären. Kleinskalige Profilelemente sind wenigstens in einer der drei Dimensionen Radialrichtung, Axialrichtung und Umfangsrichtung durch eine Abmessung und/oder durch einen Krümmungsradius gekennzeichnet, der kleiner als eine maximale Profiltiefe in dem Fahrzeugreifen ist. Die Basisfläche bleibt konkret überall dort physisch erhalten, wo keine solchen Profilelemente vorgesehen sind. Die erhaltenen Abschnitte der Basisfläche können wenigstens teilweise für einen Kontakt mit einem Fahrbahnuntergrund bestimmt sein. Dort, wo beispielweise eine Rille durch einen Laufstreifen des Fahrzeugreifens verläuft, verläuft die Basisfläche als imaginäre Fläche oberhalb der Rille weiter; dort wo beispielsweise eine Schneekante auf dem Laufstreifen angeordnet ist, verläuft die Basisfläche als imaginäre Fläche unter der Schneekante weiter.

Als Wandabschnitt ist ein Umfangsabschnitt einer Rillenwand zu verstehen. Der Abschnitt kann willkürlich, ohne Ansicht von Profilmerkmalen gewählt werde oder sich an Profilmerkmalen, beispielsweise der Umfangserstreckung eines Pitches orientieren.

Die hier beschriebenen Schnittlinien sind vorzugsweise im Kontext des Koordinatensystems aus Radialrichtung, Axialrichtung und Umfangsrichtung gerade Linien. Alternativ können die Linien auch eine Krümmung, beispielsweise in Axialrichtung aufweisen, in welchem Falle die Winkel zur Umfangsrichtung anhand von Tangenten an den Schnittlinien zu bestimmen wären. Wenn die Schnittlinien gekrümmt sind, so sollten die Krümmungsradien nicht kleiner als die volle Profiltiefe sein, damit sich die oberen und unteren Winkel nicht zu schnell ändern. In jedem Falle sind der erste obere Winkel und der erste untere Winkel (ebenso, wie weiter unten eingeführt, der zweite obere Winkel und der zweite untere Winkel) jeweils paarweise an einer gemeinsamen Umfangsposition zu bestimmen und zu vergleichen, wobei das anspruchsgemäße Verhältnis über den gesamten Wandabschnitt an beliebigen Umfangspositionen gegeben sein muss.

Die hier beschriebenen Winkel sind immer als kleinstmögliche Absolutbeträge zu verstehen. Generell können an den vier Zugangspunkten einer Kreuzung zweier Linien die Werte -x, -y, y und x gemessen werden, wobei x und y größer oder gleich Null und x + y = 180° gelten. Hierbei wäre im Sinne der vorliegenden Anmeldung der kleinste nicht negative Wert heranzuziehen, bei x=89° und y=91° also beispielsweise 89°, bei x=0° und y=180° entsprechend 0°.

Die Erfindung kann mit vorteilhaften Merkmalen weitergebildet werden, wie nachstehend beschrieben.

Der erste untere Winkel liegt vorzugsweise maximal zwischen 5° und 40°, weiter vorzugsweise zwischen 5° und 15°. Alternativ oder zusätzlich kann der erste obere Winkel zwischen 0° und 5° liegen und liegt vorzugsweise bei 0°. Je größer der erste untere Winkel und je kleiner der erste obere Winkel, desto stärker ist prinzipiell der Vorteil in der Traktion bzw. der Vorteil im Geräuschspektrum zu erwarten. Um jedoch einen guten Übergang zwischen den beiden Winkeln realisieren können, sollte die Differenz nicht zu groß sein. Die genannten Werte stellen in dieser Hinsicht einen guten Kompromiss dar.

Der erfindungsgemäße Laufstreifen ist erfindungsgemäß so fortgebildet, dass eine von der Axialrichtung und der Umfangsrichtung aufgespannte, radial in einer zweiten oberen Höhe verlaufende imaginäre Ebene einen zweiten Wandabschnitt der Umfangsrille in einer zweiten oberen Schnittlinie schneidet, wobei die zweite obere Schnittlinie einen zweiten oberen Winkel mit der Umfangsrichtung einschließt, wobei eine von der Axialrichtung und der Umfangsrichtung aufgespannte, radial in einer zweiten unteren Höhe verlaufende imaginäre Ebene den zweiten Wandabschnitt der Umfangsrille in einer zweiten unteren Schnittlinie schneidet, wobei die zweite untere Schnittlinie einen zweiten unteren Winkel mit der Umfangsrichtung einschließt, wobei die zweite obere Höhe größer ist als die zweite untere Höhe und wobei der zweite obere Winkel kleiner ist als der zweite untere Winkel. Durch den entsprechend gestalteten zweiten Wandabschnitt kann die Idee des ersten Wandabschnitts samt der damit einhergehenden Vorteile skaliert werden. So kann beispielsweise eine ganze Rillenwand aus ersten und zweiten Wandabschnitten aufgebaut werden.

Der erste und der zweite Wandabschnitt können in Umfangsrichtung aneinander angrenzen, wobei die erste untere Schnittlinie in die zweite untere Schnittlinie mündet, wenn die erste untere Höhe gleich der zweiten unteren Höhe ist, wobei sich der erste untere Winkel und der zweite untere Winkel zu entgegengesetzten Orientierungen der Umfangsrichtung beide zu der gleichen Orientierung in Axialrichtung öffnen. Auf die beschriebene Weise kann entlang der ersten und zweiten unteren Schnittlinie ein Basismuster einer Zickzackform definiert werden. Ebenso kann die erste obere Schnittlinie in die zweite obere Schnittlinie münden, wenn die erste obere Höhe gleich der zweiten oberen Höhe ist. **In** einer Ausführungsform liegen die erste und zweite obere Schnittlinie auf einer gemeinsamen Geraden, die parallel zu der Umfangsrichtung verläuft.

Der zweite untere Winkel kann zwischen 5° und 45°, vorzugsweise zwischen 15° und 35° liegen. Alternativ oder zusätzlich kann der zweite obere Winkel zwischen 0° und 5°, vorzugsweise bei 0° liegen. Die hiermit erzielten Vorteile ähneln den zu den ersten oberen und unteren Winkeln erläuterten Vorteilen.

Als maximale Umfangserstreckung eines Wandabschnitts kann jene Umfangserstreckung definiert werden, entlang derer das anspruchsgemäße Winkelverhältnis über eine möglichst große Länge beider Schnittlinien erfüllt ist, wobei zusätzlich die (erste bzw. zweite) obere und untere Höhe in Hinblick auf eine Maximierung der Umfangserstreckung gewählt werden. Der erste und/oder der zweite Wandabschnitt können jeweils eine maximale Umfangserstreckung zwischen [bitte Wert angeben]% und [bitte Wert angeben]% der vollen Umfangserstreckung des Laufstreifens aufweisen. Auf diese Weise kann das Zickzackmuster innerhalb einer Bodenaufstandsfläche eine optimale Wirkung entfalten. Der erste Wandabschnitt und der zweite Wandabschnitt können ähnliche maximale Umfangserstreckungen aufweisen. Alternativ sind die maximalen Umfangserstreckungen der Wandabschnitte asymmetrisch ausgestaltet, wobei die maximale Umfangserstreckung des ersten Wandabschnitts in einem Verhältnis zwischen 5% und 20% zu der maximalen Umfangserstreckung des zweiten Wandabschnitts stehen kann.

Wenn der erste und der zweite Wandabschnitt aneinander angrenzen, sind die ersten und/oder zweiten oberen und/oder unteren Winkel vorzugsweise so zu wählen, dass bei maximaler Umfangserstreckung beider Wandabschnitte im Mittel eine Erstreckung in Umfangsrichtung vorliegt. Auf diese Weise kann durch Aneinanderreihen aus ersten und zweiten Wandabschnitten in maximaler Erstreckung eine geschlossene Umfangsrille gestaltet werden.

Der erste und der zweite Wandabschnitt können sich gemeinsam über einen Pitch oder einen Teil eines Pitches des Profils erstrecken, wobei das Grundmuster des Pitches in weiteren Pitches wiederholt wird und zwar entweder identisch oder skaliert im Rahmen einer Pitchlängenvariation. Auf diese Weise kann das Basismuster der Zickzackform über die gesamte Umfangserstreckung des Laufstreifens fortgesetzt werden, sodass die damit verbundenen Vorteile unabhängig von der Rotationsstellung eines Fahrzeugreifens zur Geltung kommen. Bei maximaler Umfangserstreckung können aneinander angrenzende erste und zweite Wandabschnitte sich gemeinsam über einen vollen Pitch erstrecken und somit dessen Umfangserstreckung definieren.

Es können Quer- und/oder Schrägrillen in dem Laufstreifen ausgebildet sein, die in die Umfangsrille münden können. **In** einer bevorzugten Ausführungsform mündet je Pitch je eine Quer- oder Schrägrille von beiden axialen Seiten in die Umfangsrille. Die Mündungen liegen vorzugsweise in der Nähe oder direkt an einer Grenze zwischen einem ersten und zweiten Wandabschnitt und/oder in der Nähe einer Pitchgrenze. Bei maximaler Umfangserstreckung eines ersten Wandabschnittes und eines daran angrenzenden zweiten Wandabschnittes können die beiden Wandabschnitte sich gemeinsam mit der Mündung einer Quer- oder Schrägrille über einen vollen Pitch erstrecken, sodass die beiden Wandabschnitte und die Mündung eine Umfangserstreckung eines Pitches definieren.

Die Beschreibungen beziehen sich alle auf einen Neuzustand des Laufstreifens. Es kann sein, dass sich die maximale Umfangserstreckung eines Wandabschnitts mit zunehmendem Abrieb insbesondere verkleinert, sodass zwei Wandabschnitte beispielsweise im Neuzustand einen Pitch ausfüllen können, in einem abgenutzten Zustand jedoch nur noch in einem Teil des Pitches Wandabschnitte gefunden werden können, welche den anspruchsgemäßen Bedingungen genügen.

Der erste Wandabschnitt weist erfindungsgemäß zwischen einer maximalen ersten unteren Höhe und der Basisfläche des Laufstreifens eine als ebene Fläche ausgebildete Fase auf, wobei die erste obere Schnittlinie auf der Fase (bzw., davon umfasst, an einer der Fase und der Basisfläche gemeinsamen Kante) verläuft. Wenn vorliegend von einer ebenen Fläche die Rede ist, so bezieht sich dies auf das hier durchgehend verwendete Koordinatensystem aus Radialrichtung, Axialrichtung und Umfangsrichtung, in welchem beispielsweise eine von der Axialrichtung und der Umfangsrichtung aufgespannte Fläche als eben zu bezeichnen wäre. Die maximale erste untere Höhe ist definiert als die maximale Höhe der ersten unteren Schnittlinie in dem ersten Wandabschnitt, an welcher die anspruchsgemäßen Bedingungen an die Winkelverhältnisse über die gesamte Umfangserstreckung des ersten Wandabschnitts erfüllt sind. Durch die Fase wird die Umfangsrille axial jenseits einer auf der maximalen ersten unteren Höhe verlaufenden ersten unteren Schnittlinie verbreitert, was die Wasserabführung weiter verbessert, ohne den Laufstreifen in größerer radialer Tiefe zu sehr zu destabilisieren.

Die Fase ist erfindungsgemäß innerhalb des ersten Wandabschnitts dreieckig, wenn die erste obere Höhe auf dem Niveau der Basisfläche liegt und die erste obere Schnittlinie auf der Basisfläche (bzw. an der Grenze zwischen der Basisfläche und der Fase) verläuft. Zwei Ecken des Dreiecks liegen dann an der Basisfläche und definieren die Enden der maximalen Umfangserstreckung des ersten Wandabschnitts, wobei eine weitere Ecke auf dem Niveau der maximalen ersten unteren Höhe liegt. Die Fase ist innerhalb des ersten Wandabschnitts trapezförmig, wenn die erste obere Höhe radial unterhalb des Niveaus der Basisfläche liegt. Dies kann von dem Umstand begleitet sein, dass die Umfangserstreckung des ersten Wandabschnitts kleiner als dessen maximale Umfangserstreckung ist.

Analog weist der zweite Wandabschnitt zwischen einer maximalen zweiten unteren Höhe und der Basisfläche des Laufstreifens eine als ebene Fläche ausgebildete Fase auf, wobei die zweite obere Schnittlinie auf der Fase verläuft. Die maximale zweite untere Höhe ist definiert als die maximale Höhe der zweiten unteren Schnittlinie in dem zweiten Wandabschnitt, an welcher die anspruchsgemäßen Bedingungen an die Winkelverhältnisse über die gesamte Umfangserstreckung des zweiten Wandabschnitts erfüllt sind. Durch die Fase wird die Umfangsrille axial jenseits einer auf der maximalen zweiten unteren Höhe verlaufenden zweiten unteren Schnittlinie verbreitert, was die Wasserabführung weiter verbessert, ohne den Laufstreifen in größerer radialer Tiefe zu sehr zu destabilisieren.

Wie die Fase in dem ersten Wandabschnitt, ist die Fase innerhalb des zweiten Wandabschnitts dreieckig, wenn die zweite obere Höhe auf dem Niveau der Basisfläche liegt und die zweite obere Schnittlinie auf der Basisfläche verläuft. Zwei Ecken des Dreiecks liegen dann an der Basisfläche und definieren die Enden der maximalen Umfangserstreckung des zweiten Wandabschnitts, wobei eine weitere Ecke auf dem Niveau der maximalen zweiten unteren Höhe liegt. Die Fase ist innerhalb des zweiten Wandabschnitts trapezförmig, wenn die zweite obere Höhe radial unterhalb des Niveaus der Basisfläche liegt. Dies kann von dem Umstand begleitet sein, dass die Umfangserstreckung des zweiten Wandabschnitts kleiner als dessen maximale Umfangserstreckung ist.

Durch eine dreieckige oder trapezförmige Fase kann ein Übergang zwischen dem ersten bzw. zweiten unteren Winkel zu dem ersten bzw. zweiten oberen Winkel besonders effizient gestaltet werden.

Die Fase kann eine über den ersten und zweiten Wandabschnitt zusammenhängende ebene Fläche sein, wobei die maximale erste untere Höhe gleich der maximalen zweiten unteren Höhe ist. Mit anderen Worten können die Fasen des ersten und zweiten Wandabschnitts stetig differenzierbar ineinander übergehen. Dies ist eine besonders effiziente und elegante Lösung, zwei verschiedene erste und zweite untere Winkel in einen gemeinsamen oberen Winkel übergehen zu lassen, wobei der gemeinsame obere Winkel dann vorzugsweise bei 0° liegt.

Die Fase kann einen Winkel zwischen 40° und 80°, vorzugsweise zwischen 50° und 70° mit der Radialrichtung einschließen. Dieser Winkel ist im Zusammenhang mit der Lage der der maximalen ersten und/oder maximalen zweiten unteren Höhe zu sehen und/oder ist im Zusammenhang mit der axialen Verbreiterung der Umfangsrille jenseits der maximalen ersten und zweiten unteren Höhen zu sehen.

Die maximale erste untere Höhe kann zwischen 15% und 75%, vorzugsweise zwischen 25% und 40% der vollen Profiltiefe radial unterhalb der Basisfläche liegen. Alternativ oder zusätzlich kann die maximale zweite untere Höhe zwischen 15% und 75%, vorzugsweise zwischen 25% und 40% der vollen Profiltiefe radial unterhalb der Basisfläche liegen. Dementsprechend ist die maximale Höhe der ersten bzw. zweiten unteren Schnittlinie, an welcher die anspruchsgemäßen Bedingungen an die Winkelverhältnisse über die gesamte Umfangserstreckung eines entsprechenden Wandabschnitts erfüllt sind, radial sowohl vom Rillengrund als auch von der Basisfläche entfernt. Auf die beschriebene Weise liegen erste und/oder zweite untere Schnittlinien mit den entsprechenden ersten bzw. zweiten unteren Winkeln in einem Höhenbereich, in welchem die Vorteile eines größeren lateralen Kantenanteils zum Tragen kommen, ohne dass die Nachteile während der Lebensdauer des Laufstreifens zu sehr in den Vordergrund treten.

Der erste Wandabschnitt kann radial unterhalb der maximalen ersten unteren Höhe durchgehend in dem ersten unteren Winkel zur Umfangsrichtung verlaufen. Alternativ oder zusätzlich kann der zweite Wandabschnitt radial unterhalb der maximalen zweiten unteren Höhe durchgehend in dem zweiten unteren Winkel zur Umfangsrichtung verlaufen. Mit anderen Worten können der erste und/oder der zweite Wandabschnitt unterhalb der maximalen unteren Höhe wie in einer konventionellen zickzackförmigen Rille ausgestaltet sein, sodass im unteren Teil der Rille die damit verbundenen Vorteile voll zum Tragen kommen.

Der erste Wandabschnitt und etwaige weitere Wandabschnitte (wie der zweite Wandabschnitt) können jeweils im Wesentlichen punktsymmetrisch gespiegelte, an einer gegenüberliegenden Wand der Umfangsrille ausgebildete Äquivalente aufweisen. Mit anderen Worten können beide axial einander gegenüberliegende Rillenwände jeweils mit ersten und zweiten Wandabschnitten ausgestaltet sein. Hierbei können je zwei ähnlich ausgestaltete erste Wandabschnitte und je zwei ähnlich ausgestaltete zweite Wandabschnitte einander axial gegenüberliegend in einem gleichen Umfangsabschnitt oder wenigstens in nahe beieinander liegenden Umfangsabschnitten angeordnet sein, sodass sich im radial unteren Rillenbereich an beiden Rillenwänden ein übereinstimmender zickzackförmiger Verlauf ergibt. Die Wandabschnitte können insofern im Wesentlichen (im Gegensatz zu mit absoluter Genauigkeit) punktsymmetrisch gespiegelt sein, als die ersten und/oder zweiten oberen und/oder unteren Winkel an den axial gegenüberliegenden Seiten der Umfangsrille quantitativ leicht voneinander abweichen können, wobei jedoch das qualitative Grundmuster im Zusammenspiel der Parameter beibehalten wird. Gleiches gilt für die maximalen Umfangserstreckungen der im Wesentlichen punktsymmetrisch gespiegelten Wandabschnitte.

Die Erfindung betrifft außerdem einen Fahrzeugreifen mit vor- und /oder nachstehend beschriebenem Laufstreifen. Gemäß der Erfindung ausgeführte Fahrzeugreifen sind Reifen beliebiger Bauart, insbesondere Radialreifen, und Reifen beliebigen Typs, insbesondere Fahrzeugluftreifen für Kraftfahrzeuge, wie Personenkraftwagen, Light-Trucks oder Nutzfahrzeuge.

Die Erfindung wird nachfolgend unter Bezugnahme auf die beigefügten Zeichnungen anhand vorteilhafter Ausführungsformen beispielhaft beschrieben. Es zeigen:
Figur 1 schematisch eine Draufsicht auf einen Abschnitt, umfassend eine Umfangsrille, einer Ausführungsform des erfindungsgemäßen Laufstreifens,
Figur 2 schematisch eine perspektivische Ansicht des in Figur 1 gezeigten Abschnitts,
Figur 3 schematisch eine Schnittansicht durch zwei erste Wandabschnitte,
Figur 4 schematisch eine Schnittansicht an der Grenze zwischen ersten und zweiten Wandabschnitten sowie durch einen ersten Wandabschnitt.

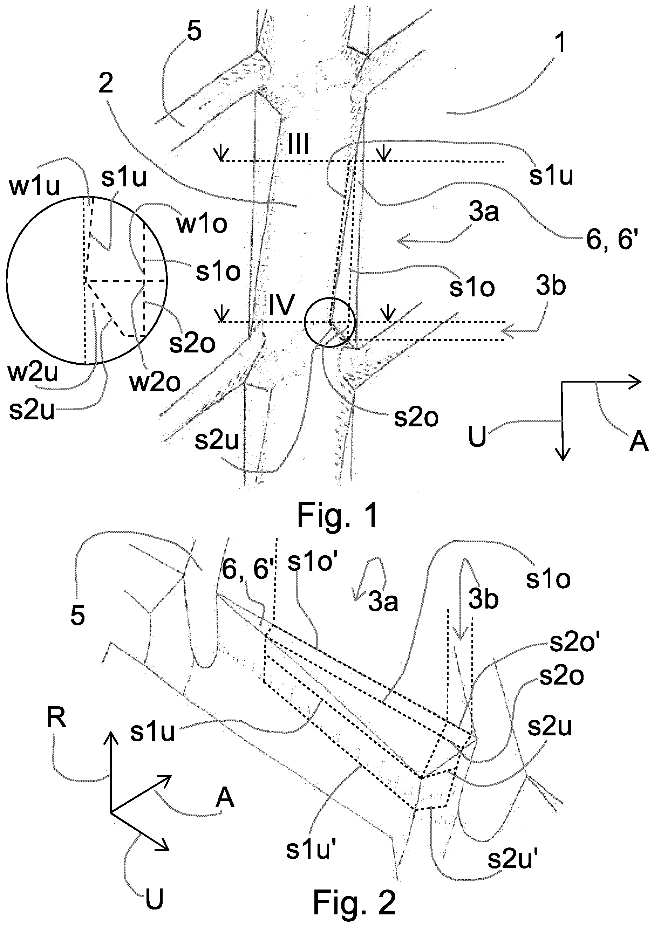

Figur 1 zeigt einen Ausschnitt einer Ausführungsform eines erfindungsgemäßen Laufstreifens 1 in der Draufsicht. Eine Umfangsrille 2 steht im Zentrum der Figur; im linkes Bildbereich ist in einem Kreis eine vergrößerte Detailansicht abgebildet; im rechten unteren Bereich ist ein Koordinatenkreuz angeordnet, demzufolge die Zeichnungsebene von der Umfangsrichtung U und der Axialrichtung A aufgespannt wird. In die Umfangsrille 2 münden in dem gezeigten Ausschnitt vier Schrägrillen 5 ein. Die Umfangsrille 2 ist in der äußeren Kontur von genau in Umfangsrichtung U verlaufenden Kanten begrenzt. Von diesen Kanten aus erstrecken sich Fasen 6, 6' zum Rilleninneren, hin zu einem zickzackförmigen Verlauf der Umfangsrille 2. Begrenzt von waagerechten, gestrichelten Linien, sind ein erster Wandabschnitt 3a und ein zweiter Wandabschnitt 3b mit Pfeilen markiert. Der erste Wandabschnitt 3a erstreckt sich über einen Umfangsabschnitt zwischen der oberen und der mittleren waagerechten gestrichelten Linie in Figur 1, der zweite Wandabschnitt 3b erstreckt sich über einen Umfangsabschnitt zwischen der mittleren und der unteren waagerechten gestrichelten Linie in Figur 1. Prinzipiell kann zwischen einer Fase 6 des ersten Wandabschnitts 3a und einer Fase 6' des zweiten Wandabschnitts 3b unterschieden werden. Weil beide Fasen 6, 6' auf einer zusammenhängenden ebenen Fläche ausgebildet sind, wird in den Figuren in Hinblick auf die Fasen 6, 6' nicht zwischen den Wandabschnitten 3a, 3b unterschieden.

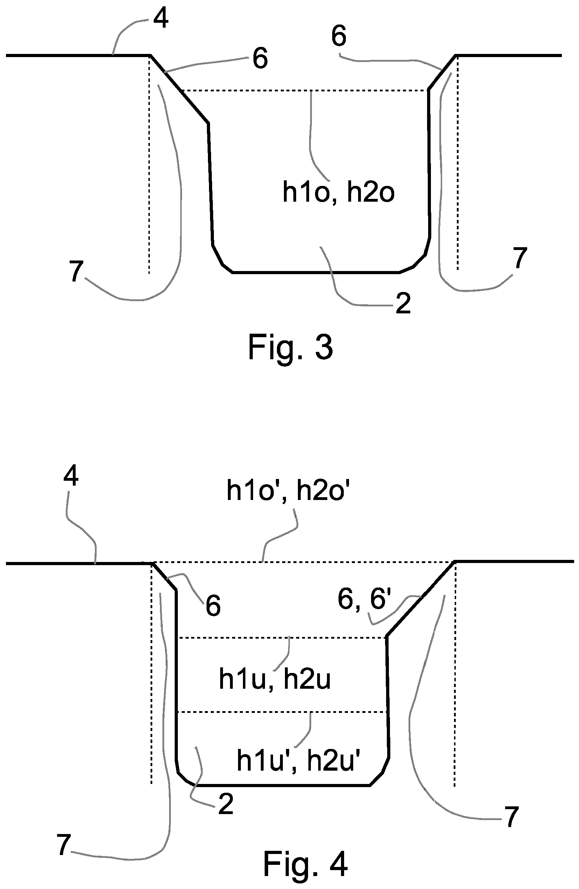

Gemäß Figur 1 erstrecken sich in dem ersten Wandabschnitt 3a eine erste obere Schnittlinie s1o radial auf einer konstanten ersten oberen Höhe h1o (vgl. Figur 3) und eine erste untere Schnittlinie s1u radial auf einer konstanten ersten unteren Höhe h1u (vgl. Figur 4). In dem zweiten Wandabschnitt 3b erstrecken sich eine zweite obere Schnittlinie s2o radial auf einer konstanten zweiten oberen Höhe h2o (vgl. Figur 3) und eine zweite untere Schnittlinie s2u radial auf einer konstanten zweiten unteren Höhe h2u (vgl. Figur 4). Die oberen Höhen h1o und h2o gleichen einander und die oberen Schnittlinien s1o, s2o münden ineinander. Die unteren Höhen h1u und h2u gleichen einander und die unteren Schnittlinien s1u, s2u münden ineinander.

Der Mündungsbereich bzw. der Grenzbereich zwischen dem ersten Wandabschnitt 3a und dem zweiten Wandabschnitt 3b ist in dem Kreis im linken Bildbereich der Figur 1 vergrößert dargestellt. Hierbei sind nur die Verläufe der Schnittlinie s1o, s2o, s1u, s2u, die Grenzlinien des zweiten Wandabschnitts 3b und der Verlauf der Umfangsrichtung U in der Vergrößerung dargestellt. Die erste obere Schnittlinie s1o und die zweite obere Schnittlinie s2o schließen jeweils einen ersten oberen Winkel w1o bzw. einen zweiten oberen Winkel w2o von 0° mit der Umfangsrichtung U ein. Die erste untere Schnittline s1u und die zweite untere Schnittline s2u schließen jeweils einen von Null verschiedenen ersten unteren Winkel w1u bzw. zweiten unteren Winkel w2u mit der Umfangsrichtung U ein. Hierbei öffnen sich der erste untere Winkel w1u und der zweite untere Winkel w2u zu entgegengesetzten Orientierungen der Umfangsrichtung U, jedoch beide zu der gleichen Orientierung in Axialrichtung A, wodurch ein Zacken einer Zickzackform definiert wird.

Figur 2 zeigt eine perspektivische Ansicht des Ausschnitts aus Figur 1. Gemäß dem Koordinatenkreuz im unteren linken Bildrand sind in Figur 2 auch Merkmale in Radialrichtung R auflösbar. Die Grenzen des ersten und zweiten Wandabschnitts 3a, 3b sind durch in Radialrichtung verlaufende gestrichelte Linien gekennzeichnet, die radial oberhalb des Laufstreifens und an den Rillenwänden verlaufen; die radial oberhalb des Laufstreifens verlaufenden gestrichelten Linien sind mit den an der Rillenwand in Radialrichtung verlaufenden gestrichelten Linien über auf der Fase 6, 6' verlaufende gestrichelte Linien verbunden, wobei letztere senkrecht zu der Umfangsrichtung verlaufen. Wie der Figur 2 zu entnehmen, verlaufen die erste und zweite untere Schnittlinie s1u, s2u auf einer Höhe h1u, h2u (vgl. Figur 4), welche als maximale erste bzw. maximale zweite unteren Höhe definiert werden kann: Würde ein radial höheres Niveau als h1u, h2u für diese Schnittlinien gewählt, würden die Schnittlinien wenigstens teilweise auf der Fase 6, 6' verlaufen und dort wie die erste und zweite obere Schnittlinie s1o, s2o parallel zur Umfangsrichtung U verlaufen, sodass die anspruchsgemäßen Winkelbeziehungen nicht mehr erfüllt wären.

Zusätzlich zu den in Figur 1 eingezeichneten ersten und zweiten oberen und unteren Schnittlinien s1o, s2o, s1u, s2u sind in Figur 2 weitere Schnittlinien eingezeichnet. So erstreckt sich eine weitere erste untere Schnittlinie s1u' radial auf einer weiteren konstanten ersten unteren Höhe h1u' (vgl. Fig. 4), die radial unterhalb der maximalen ersten unteren Höhe h1u liegt. Die beiden ersten unteren Schnittlinien s1u, s1u' schließen gleichgroße Winkel w1u mit der Umfangsrichtung U ein, sodass die Rillenwand unterhalb der maximalen ersten unteren Höhe h1u einen gleichmäßigen Verlauf aufweist.

Weiterhin erstreckt sich gemäß Figur 2 in dem ersten Wandabschnitt 3a eine weitere erste obere Schnittlinie s1o' radial auf einer weiteren konstanten ersten oberen Höhe h1o', wobei letztere auf dem Niveau der Basisfläche 4 liegt (vgl. Figur 4). In dem zweiten Wandabschnitt 3b erstreckt sich eine weitere zweite obere Schnittlinie s2o' radial auf einer weiteren konstanten zweiten oberen Höhe h2o', auf dem Niveau der Basisfläche 4 (vgl. Figur 4). Die weiteren oberen Schnittlinien s1o', s2o' münden ineinander und schließen gleich große Winkel von jeweils 0° mit der Umfangsrichtung U ein, liegen also auf einer gemeinsamen Umfangsgeraden.

Zudem erstreckt sich eine weitere zweite untere Schnittlinie s1u' radial auf einer weiteren konstanten zweiten unteren Höhe h1u' (vgl. Figur 4). Die weiteren unteren Höhen h1u' und h2u' gleichen einander und die weiteren unteren Schnittlinien s1u', s2u' münden ineinander.

Wie an den Figuren 1 und 2 ersichtlich, sind die dargestellten Wandabschnitte 3a, 3b nicht mit maximaler Umfangserstreckung gewählt. Dementsprechend haben die Fasen 6, 6' Trapezform. Ausgehend von den oberen Schnittlinien s1o, s2o können die Wandabschnitte 3a, 3b nicht länger gewählt werden, weil die Schnittlinien s1o, s2o sonst von der Fase 6, 6' auf die radial darunter liegenden vertikalen Teile der Rillenwand abkommen würden. Wenn im Gegensatz hierzu die gemäß Figur 2 auf dem Niveau der Basisfläche 4 liegenden weiteren ersten bzw. zweiten oberen Schnittlinien s1o', s2o'gewählt werden, könnten die Wandabschnitte 3a, 3b vorliegend auch bis zu den Mündungen der Schrägrillen 5 gezogen werden, ohne dass die weiteren oberen Schnittlinien s1o', s2o' aus dem Bereich der Fase 6, 6' ausbrechen würden. Somit wären entlang der weiteren oberen Schnittlinien durchgehend obere Winkel w1o, w2o von 0° zur Umfangsrichtung gegeben und das anspruchsgemäße Winkelverhältnis zu den Winkeln w1u, w2u wäre durchgehend gewahrt. In diesem Fall läge eine dreieckige Fase 6, 6' bei einer maximalen Umfangserstreckung der Wandabschnitte 3a, 3b vor.

Die Figur 3 zeigt eine Schnittansicht, wobei die Schnittebene von der Axialrichtung A und der Radialrichtung R aufgespannt wird und an der in Figur 1 mit dem Numeral III zwischen zwei Pfeilen gekennzeichneten Position durch die Umfangsrille 2 verläuft. Diese Position entspricht der Umfangsposition einer der Grenzen des ersten Wandabschnitts 3a. Die erste obere Höhe h1o liegt gemäß Figur 3 unterhalb des Niveaus der Basisfläche 4 und markiert am Rande des ersten Wandabschnitts 3a genau den Übergang der Fase 6 in einen vertikalen Teil der rechten Rillenwand (die Bezeichnungen rechts und links beziehen sich auf die Ausrichtung in den Zeichnungen und lassen für sich genommen keine Rückschlüsse über eine entsprechende Orientierung im Laufstreifen zu). Die Fase 6 an der linken Rillenwand ist, wie in Figur 1 zu erkennen, im Wesentlichen punktsymmetrisch zu der Fase 6 an der rechten Rillenwand ausgebildet. Aufgrund der Form der Fasen 6 liegt der Übergang der Fase 6 zu einem vertikalen Teil der linken Rillenwand jedoch in der gemäß Figur 3 dargestellten Schnittebene radial unterhalb der ersten oberen Höhe h1o. Die Fasen 6 schließen Fasenwinkel 7 mit der als gestrichelte vertikale Linien dargestellten Radialrichtung R ein.

Die Figur 4 zeigt eine Schnittansicht, wobei die Schnittebene von der Axialrichtung und der Radialrichtung aufgespannt wird und an der in Figur 1 mit dem Numeral IV zwischen zwei Pfeilen gekennzeichneten Position durch die Umfangsrille 2 verläuft. Diese Position entspricht der Umfangsposition an der Grenze zwischen dem ersten und zweiten Wandabschnitt 3a, 3b (vgl. Figuren 1 und 2). An der linken Rillenwand ist ein weiterer Schnitt durch die auch gemäß Figur 3 geschnittene Fase 6 zu sehen, wobei die Fase 6 in Figur 4 den gleichen Fasenwinkel 7 mit der Radialrichtung einschließt, sich jedoch radial weniger weit unterhalb der Basisfläche 4 erstreckt. An der rechten Rillenwand geht die Fase 6, 6' bei der ersten und zweiten unteren Höhe h1u, h2u in den vertikalen Teil der Rillenwand über. Die erste und zweite unteren Höhe h1u, h2u sind radial betrachtet die maximalen Höhen, auf denen entsprechende erste und zweite untere Schnittlinien s1u, s2u in dem ersten bzw. zweiten Wandabschnitt 3a, 3b vollständig unterhalb der Fase 6, 6'verlaufen können (vgl. Figur 2). Der in Figur 4 gezeigte Fasenwinkel 7 an der rechten Rillenwand, an der Grenzlinie der beiden Fasen 6, 6', entspricht dem Fasenwinkel 7 an der in Figur 3 dargestellten Umfangsposition.

### Bezugszeichenliste

- 1: Laufstreifen
- 2: Umfangsrille
- 3a: erster Wandabschnitt
- 3b: zweiter Wandabschnitt
- 4: Basisfläche
- 5: Quer- oder Schrägrille
- 6: Fase
- 6': Fase
- 7: Fasenwinkel
- A: Axialrichtung
- R: Radialrichtung
- U: Umfangsrichtung
- h1o: erste obere Höhe
- h1u: erste untere Höhe
- h1o'.: weitere erste obere Höhe
- h1u': weitere erste untere Höhe
- h2o: zweite obere Höhe
- h2u: zweite untere Höhe
- h2o': weitere zweite obere Höhe
- h2u': weitere zweite untere Höhe
- s1o: erste obere Schnittlinie
- s1u: erste untere Schnittlinie
- s1o': weitere erste obere Schnittlinie
- s1u': weitere erste untere Schnittlinie
- s2o: zweite obere Schnittlinie
- s2u: zweite untere Schnittlinie
- s2o': weitere zweite obere Schnittlinie
- s2u': weitere zweite untere Schnittlinie
- w1o: erster oberer Winkel
- w1u: erster unterer Winkel
- w2o: zweiter oberer Winkel
- w2u: zweiter unterer Winkel

## Patentansprüche

1. Laufstreifen (1) für einen Fahrzeugreifen, wobei als Bestandteil eines Profils eine Umfangsrille (2) in dem Laufstreifen (1) ausgebildet ist, wobei eine von der Axialrichtung (A) und der Umfangsrichtung (U) aufgespannte, radial in einer ersten oberen Höhe (h1o) verlaufende imaginäre Ebene einen ersten Wandabschnitt (3a) der Umfangsrille (2) in einer ersten oberen Schnittlinie (s1o) schneidet, wobei die erste obere Schnittlinie (s1o) einen ersten oberen Winkel (w1o) mit der Umfangsrichtung (U) einschließt, wobei eine von der Axialrichtung (A) und der Umfangsrichtung (U) aufgespannte, radial in einer ersten unteren Höhe (h1u) verlaufende imaginäre Ebene den ersten Wandabschnitt (3a) der Umfangsrille (2) in einer ersten unteren Schnittlinie (s1u) schneidet, wobei die erste untere Schnittlinie (s1u) einen ersten unteren Winkel (w1u) mit der Umfangsrichtung (U) einschließt, wobei die erste obere Höhe (h1o) größer ist, also in Radialrichtung weiter nach außen ragt als die erste untere Höhe (h1u), wobei der erste obere Winkel (w1o) kleiner ist als der erste untere Winkel (w1u),
wobei eine von der Axialrichtung (A) und der Umfangsrichtung (U) aufgespannte, radial in einer zweiten oberen Höhe (h2o) verlaufende imaginäre Ebene einen zweiten Wandabschnitt (3b) der Umfangsrille (2) in einer zweiten oberen Schnittlinie (s2o) schneidet, wobei die zweite obere Schnittlinie (s2o) einen zweiten oberen Winkel (w2o) mit der Umfangsrichtung (U) einschließt, wobei eine von der Axialrichtung (A) und der Umfangsrichtung (U) aufgespannte, radial in einer zweiten unteren Höhe (h2u) verlaufende imaginäre Ebene den zweiten Wandabschnitt (3b) der Umfangsrille (2) in einer zweiten unteren Schnittlinie (s2u) schneidet, wobei die zweite untere Schnittlinie einen zweiten unteren Winkel (w2u) mit der Umfangsrichtung (U) einschließt, wobei die zweite obere Höhe (h2o) größer ist als die zweite untere Höhe (h2u) und wobei der zweite obere Winkel (w2o) kleiner ist als der zweite untere Winkel (w2u),
wobei der erste Wandabschnitt (3a) zwischen einer maximalen ersten unteren Höhe (h1u) und einer Basisfläche (4) des Laufstreifens (1) eine als ebene Fläche ausgebildete Fase (6) aufweist, wobei die erste obere Schnittlinie (s1o) auf der Fase (6) verläuft,
wobei der zweite Wandabschnitt (3b) zwischen einer maximalen zweiten unteren Höhe (s2o) und einer Basisfläche (4) des Laufstreifens (1) eine als ebene Fläche ausgebildete Fase (6') aufweist, wobei die zweite obere Schnittlinie (s2o) auf der Fase (6) verläuft,
**dadurch gekennzeichnet,**
**dass** die Fase (6) innerhalb des ersten Wandabschnitts (3a) dreieckig ist, wenn die erste obere Höhe (h1o) auf dem Niveau der Basisfläche (4) liegt und die erste obere Schnittlinie (s1o, s1o') auf der Basisfläche (4) verläuft, wobei die Fase (6) innerhalb des ersten Wandabschnitts (3a) trapezförmig ist, wenn die erste obere Höhe (h1o) radial unterhalb des Niveaus der Basisfläche (4) liegt,
wobei die Fase (6) innerhalb des zweiten Wandabschnitts (3b) dreieckig ist, wenn die zweite obere Höhe (h2o) auf dem Niveau der Basisfläche (4) liegt und die zweite obere Schnittlinie (s2o, s2o') auf der Basisfläche (4) verläuft, wobei die Fase (6') innerhalb des zweiten Wandabschnitts (3a) trapezförmig ist, wenn die zweite obere Höhe (h2o) radial unterhalb des Niveaus der Basisfläche (4) liegt.

2. Laufstreifen (1) gemäß Anspruch 1, **dadurch gekennzeichnet, dass** der erste untere Winkel (w1u) zwischen 5° und 40°, vorzugsweise zwischen 5° und 15° liegt und/oder dass der erste obere Winkel (w1o) zwischen 0° und 5°, vorzugsweise bei 0° liegt.

3. Laufstreifen (1) gemäß einem der Ansprüche 1 oder 2, **dadurch gekennzeichnet, dass** der erste und der zweite Wandabschnitt (3a, 3b) in Umfangsrichtung (U) aneinander angrenzen, wobei die erste untere Schnittlinie (s1u) in die zweite untere Schnittlinie (s2u) mündet, wenn die erste untere Höhe (h1u) gleich der zweiten unteren Höhe (h2u) ist, wobei sich der erste untere Winkel (w1u) und der zweite untere Winkel (w2u) zu entgegengesetzten Orientierungen der Umfangsrichtung (U) beide zu der gleichen Orientierung in Axialrichtung (A) öffnen.

4. Laufstreifen (1) gemäß einem der Ansprüche 1 bis 3, **dadurch gekennzeichnet, dass** sich der erste und der zweite Wandabschnitt (3a, 3b) gemeinsam über einen Pitch oder einen Teil eines Pitches des Profils erstrecken, wobei das Grundmuster des Pitches in weiteren Pitches wiederholt wird und zwar entweder identisch oder skaliert im Rahmen einer Pitchlängenvariation.

5. Laufstreifen (1) gemäß einem der Ansprüche 1 bis 4, **dadurch gekennzeichnet, dass** der zweite untere Winkel (w2u) zwischen 5° und 45°, vorzugsweise zwischen 15° und 35° liegt und/oder dass der zweite obere Winkel (w2o) zwischen 0° und 5°, vorzugsweise bei 0° liegt.

6. Laufstreifen (1) gemäß einem der Ansprüche 1 bis 5, **dadurch gekennzeichnet, dass** die Fase (6, 6') eine über den ersten und zweiten Wandabschnitt (3a, 3b) zusammenhängende ebene Fläche ist, wobei die maximale erste untere Höhe (s1u) gleich der maximalen zweiten unteren Höhe (s2u) ist.

7. Laufstreifen (1) gemäß einem der Ansprüche 1 bis 6, **dadurch gekennzeichnet, dass** die Fase (6, 6') einen Fasenwinkel (7) zwischen 40° und 80°, vorzugsweise zwischen 50° und 70° mit der Radialrichtung (R) einschließt.

8. Laufstreifen (1) gemäß einem der Ansprüche 1 bis 7, **dadurch gekennzeichnet, dass** eine maximale erste untere Höhe (h1u) zwischen 15% und 75%, vorzugsweise zwischen 25% und 40% der vollen Profiltiefe radial unterhalb der Basisfläche (4) liegt und/oder dass eine maximale zweite untere Höhe (h2u) zwischen 15% und 75%, vorzugsweise zwischen 25% und 40% der vollen Profiltiefe radial unterhalb der Basisfläche (4) liegt.

9. Laufstreifen (1) gemäß einem der Ansprüche 1 bis 8, **dadurch gekennzeichnet, dass** der erste Wandabschnitt (3a) radial unterhalb der maximalen ersten unteren Höhe (h1u) durchgehend in dem ersten unteren Winkel (w1u) zur Umfangsrichtung (U) verläuft und/oder dass der zweite Wandabschnitt (3b) radial unterhalb der maximalen zweiten unteren Höhe (h2u) durchgehend in dem zweiten unteren Winkel (w2u) zur Umfangsrichtung (U) verläuft.

10. Laufstreifen (1) gemäß einem der Ansprüche 1 bis 9, **dadurch gekennzeichnet, dass** der erste Wandabschnitt (3a) und etwaige weitere Wandabschnitte (3b) jeweils im Wesentlichen punktsymmetrisch gespiegelte, an einer gegenüberliegenden Wand der Umfangsrille ausgebildete Äquivalente aufweisen.

## Claims

1. Tread (1) for a vehicle tyre, wherein a circumferential groove (2) is formed in the tread (1) as part of a profile, an imaginary plane that is defined by the axial direction (A) and the circumferential direction (U) and runs radially at a first upper height (h1o) intersects a first wall portion (3a) of the circumferential groove (2) in a first upper sectional line (s1o), wherein the first upper sectional line (s1o) encloses a first upper angle (w1o) with the circumferential direction (U), wherein an imaginary plane that is defined by the axial direction (A) and the circumferential direction (U) and runs radially at a first lower height (h1u) intersects the first wall portion (3a) of the circumferential groove (2) in a first lower sectional line (s1u), wherein the first lower sectional line (s1u) encloses a first lower angle (w1u) with the circumferential direction (U), wherein the first upper height (h1o) is greater, i.e. protrudes further outwards in the radial direction, than the first lower height (h1u), wherein the first upper angle (w1o) is smaller than the first lower angle (w1u), wherein an imaginary plane that is defined by the axial direction (A) and the circumferential direction (U) and runs radially at a second upper height (h2o) intersects a second wall portion (3b) of the circumferential groove (2) in a second upper sectional line (s2o), wherein the second upper sectional line (s2o) encloses a second upper angle (w2o) with the circumferential direction (U), wherein an imaginary plane that is defined by the axial direction (A) and the circumferential direction (U) and runs radially at a second lower height (h2u) intersects the second wall portion (3b) of the circumferential groove (2) in a second lower sectional line (s2u), wherein the second lower sectional line encloses a second lower angle (w2u) with the circumferential direction (U), wherein the second upper height (h2o) is greater than the second lower height (h2u), and wherein the second upper angle (w2o) is smaller than the second lower angle (w2u),
wherein the first wall portion (3a) has a bevel (6) in the form of a planar surface between a maximum first lower height (h1u) and a base surface (4) of the tread (1), wherein the first upper sectional line (s1o) runs on the bevel (6),
wherein the second wall portion (3b) has a bevel (6') in the form of a planar surface between a maximum second lower height (s2o) and a base surface (4) of the tread (1), wherein the second upper sectional line (s2o) runs on the bevel (6), **characterized**
**in that** the bevel (6) within the first wall portion (3a) is triangular when the first upper height (h1o) is at the level of the base surface (4) and the first upper sectional line (s1o, s1o') runs on the base surface (4), wherein the bevel (6) within the first wall portion (3a) is trapezoidal when the first upper height (h1o) lies radially below the level of the base surface (4),
wherein the bevel (6) within the second wall portion (3b) is triangular when the second upper height (h2o) is at the level of the base surface (4) and the second upper sectional line (s2o, s2o') runs on the base surface (4), wherein the bevel (6') within the second wall portion (3a) is trapezoidal when the second upper height (h2o) lies radially below the level of the base surface (4).

2. Tread (1) according to Claim 1, **characterized in that** the first lower angle (w1u) lies between 5° and 40°, preferably between 5° and 15°, and/or **in that** the first upper angle (w1o) lies between 0° and 5°, preferably at 0°.

3. Tread (1) according to either of Claims 1 and 2, **characterized in that** the first and the second wall portion (3a, 3b) adjoin one another in the circumferential direction (U), wherein the first lower sectional line (s1u) opens into the second lower sectional line (s2u) when the first lower height (h1u) is equal to the second lower height (h2u), wherein the first lower angle (w1u) and the second lower angle (w2u) open to opposite orientations in the circumferential direction (U) and both to the same orientation in the axial direction (A).

4. Tread (1) according to one of Claims 1 to 3, **characterized in that** the first and the second wall portion (3a, 3b) extend jointly over a pitch or part of a pitch of the profile, wherein the basic pattern of the pitch is repeated in further pitches, specifically either identically or scaled within the scope of a pitch length variation.

5. Tread (1) according to one of Claims 1 to 4, **characterized in that** the second lower angle (w2u) lies between 5° and 45°, preferably between 15° and 35°, and/or **in that** the second upper angle (w2o) lies between 0° and 5°, preferably at 0°.

6. Tread (1) according to one of Claims 1 to 5, **characterized in that** the bevel (6, 6') is a planar surface that is continuous over the first and second wall portions (3a, 3b), wherein the maximum first lower height (s1u) is equal to the maximum second lower height (s2u).

7. Tread (1) according to one of Claims 1 to 6, **characterized in that** the bevel (6, 6') encloses a bevel angle (7) between 40° and 80°, preferably between 50° and 70°, with the radial direction (R).

8. Tread (1) according to one of Claims 1 to 7, **characterized in that** a maximum first lower height (h1u) lies between 15% and 75%, preferably between 25% and 40%, of the full profile depth radially below the base surface (4), and/or **in that** a maximum second lower height (h2u) lies between 15% and 75%, preferably lies between 25% and 40% of the full profile depth radially below the base surface (4).

9. Tread (1) according to one of Claims 1 to 8, **characterized in that** the first wall portion (3a) runs radially below the maximum first lower height (h1u) continuously at the first lower angle (w1u) with respect to the circumferential direction (U) and/or in that the second wall portion (3b) runs radially below the maximum second lower height (h2u) continuously at the second lower angle (w2u) with respect to the circumferential direction (U).

10. Tread (1) according to one of Claims 1 to 9, **characterized in that** the first wall portion (3a) and any further wall portions (3b) each have substantially point-symmetrically mirrored equivalents formed on an opposite wall of the circumferential groove.

## Revendications

1. Bande de roulement (1) pour un pneu de véhicule, une rainure périphérique (2) étant formée dans la bande de roulement (1) en tant que partie intégrante d'un profil, un plan imaginaire défini par la direction axiale (A) et de la direction périphérique (U), s'étendant radialement à une première hauteur supérieure (h1o) coupant une première section de paroi (3a) de la rainure périphérique (2) dans une première ligne de découpe supérieure (s1o), la première ligne de découpe supérieure (s1o) formant un premier angle supérieur (w1o) avec la direction périphérique (U), un plan imaginaire défini par la direction axiale (A) et la direction périphérique (U), s'étendant radialement à une première hauteur inférieure (h1u) coupant la première section de paroi (3a) de la rainure périphérique (2) selon une première ligne de coupe inférieure (s1u), la première ligne de coupe inférieure (s1u) formant un premier angle inférieur (w1u) avec la direction périphérique (U), la première hauteur supérieure (h1o) étant supérieure, donc dépassant davantage vers l'extérieur dans la direction radiale que la première hauteur inférieure (h1u), le premier angle supérieur (w1o) étant inférieur au premier angle inférieur (w1u), un plan imaginaire défini par la direction axiale (A) et la direction périphérique (U), s'étendant radialement à une deuxième hauteur supérieure (h2o) coupant une deuxième section de paroi (3b) de la rainure périphérique (2) selon une deuxième ligne de coupe supérieure (s2o), la deuxième ligne de coupe supérieure (s2o) formant un deuxième angle supérieur (w2o) avec la direction périphérique (U), un plan imaginaire formé par la direction axiale (A) et la direction périphérique (U), s'étendant radialement à une deuxième hauteur inférieure (h2u) coupant la deuxième section de paroi (3b) de la rainure périphérique (2) selon une deuxième ligne de coupe inférieure (s2u), la deuxième ligne de coupe inférieure formant un deuxième angle inférieur (w2u) avec la direction périphérique (U), la deuxième hauteur supérieure (h2o) étant supérieure à la deuxième hauteur inférieure (h2u) et le deuxième angle supérieur (w2o) étant inférieur au deuxième angle inférieur (w2u),
la première section de paroi (3a) comportant entre une première hauteur inférieure maximale (h1u) et une surface de base (4) de la bande de roulement (1) un chanfrein (6) formé comme surface plane, la première ligne de coupe supérieure (s1o) s'étendant sur le chanfrein (6),
la deuxième section de paroi (3b) comportant entre une deuxième hauteur inférieure maximale (s2o) et une surface de base (4) de la bande de roulement (1) un chanfrein (6') formé comme surface plane, la deuxième ligne de coupe supérieure (s2o) s'étendant sur le chanfrein (6),
**caractérisée en ce**
**que** le chanfrein (6) est triangulaire à l'intérieur de la première section de paroi (3a) lorsque la première hauteur supérieure (h1o) se trouve au niveau de la surface de base (4) et que la première ligne de coupe supérieure (s1o, s1o') se trouve sur la surface de base (4), le chanfrein (6) étant trapézoïdal dans la première section de la paroi (3a) lorsque la première hauteur supérieure (h1o) est radialement inférieure au niveau de la surface de base (4),
le chanfrein (6) étant triangulaire à l'intérieur de la deuxième section de paroi (3b) lorsque la deuxième hauteur supérieure (h2o) se trouve au niveau de la surface de base (4) et que la deuxième ligne de coupe supérieure (s2o, s2o') s'étend sur la surface de base (4), le chanfrein (6') étant trapézoïdal à l'intérieur de la deuxième section de paroi (3a) lorsque la deuxième hauteur supérieure (h2o) est radialement inférieure au niveau de la surface de base (4).

2. Bande de roulement (1) selon la revendication 1, **caractérisée en ce que** le premier angle inférieur (w1u) est compris entre 5° et 40°, de préférence entre 5° et 15° et/ou que le premier angle supérieur (w1o) est compris entre 0° et 5° de préférence est de 0°.

3. Bande de roulement (1) selon l'une des revendications 1 ou 2, **caractérisée en ce que** la première et la deuxième section de paroi (3a, 3b) se jouxtent l'une l'autre dans la direction périphérique (U), la première ligne de coupe inférieure (s1u) se terminant dans la deuxième ligne de coupe inférieure (s2u) lorsque la première hauteur inférieure (h1u) est égale à la deuxième hauteur inférieure (h2u), le premier angle inférieur (w1u) et le deuxième angle inférieur (w2u) s'ouvrant tous deux, par rapport à des orientations opposées de la direction périphérique (U), vers la même orientation dans la direction axiale (A).

4. Bande de roulement (1) selon l'une des revendications 1 à 3, **caractérisée en ce que** la première et la deuxième section de paroi (3a, 3b) s'étendent ensemble sur un pas ou une partie d'un pas du profil, le motif de base du pas étant répété dans d'autres pas, à savoir soit de manière identique soit de manière échelonnée dans le cadre d'une variation de longueur de pas.

5. Bande de roulement (1) selon l'une des revendications 1 à 4, **caractérisée en ce que** le deuxième angle inférieur (w2u) est compris entre 5° et 45°, de préférence entre 15° et 35° et/ou que le deuxième angle supérieur (w2o) est compris entre 0° et 5°, de préférence est de 0°.

6. Bande de roulement (1) selon l'une des revendications 1 à 5, **caractérisée en ce que** le chanfrein (6, 6') est une surface plane contiguë par la première et la deuxième section de paroi (3a, 3b), la première hauteur inférieure maximale (s1u) étant égale à la deuxième hauteur inférieure maximale (s2u).

7. Bande de roulement (1) selon l'une des revendications 1 à 6, **caractérisée en ce que** le chanfrein (6, 6') forme un angle de chanfrein (7) compris entre 40° et 80°, de préférence entre 50° et 70° avec la direction radiale (R).

8. Bande de roulement (1) selon l'une des revendications 1 à 7, **caractérisée en ce qu'**une première hauteur inférieure maximale (h1u) est comprise entre 15 % et 75 %, de préférence entre 25 % et 40 % de la profondeur totale de profil radialement en dessous de la surface de base (4) et/ou qu'une deuxième hauteur inférieure maximale (h2u) est comprise entre 15 % et 75 %, de préférence entre 25 % et 40 % de la profondeur totale de profil radialement en dessous de la surface de base (4).

9. Bande de roulement (1) selon l'une des revendications 1 à 8, **caractérisée en ce que** la première section de paroi (3a) s'étend par rapport à la direction périphérique (U) selon le premier angle inférieur (w1u) de manière continue radialement en dessous de la première hauteur inférieure maximale (h1u) et/ou que la deuxième section de paroi (3b) s'étend par rapport à la direction périphérique (U) selon le deuxième angle inférieur (w2u) de manière continue radialement en dessous de la deuxième hauteur inférieure maximale (h2u).

10. Bande de roulement (1) selon l'une des revendications 1 à 9, **caractérisée en ce que** la première section de paroi (3a) et d'éventuelles sections de paroi supplémentaires (3b) comportent chacune des équivalents sensiblement symétriques par rapport à un point, formés sur une paroi opposée de la rainure périphérique.
